Europäisches Patentamt

European Patent Office

Office européen des brevets

(19)

(11) Numéro de publication : **0 178 959**
**B1**

(12) FASCICULE DE BREVET EUROPÉEN

(45) Date de publication du fascicule du brevet :
15.06.88

(51) Int. Cl.⁴ : **F 42 B 13/267, F 02 K 9/12**

(21) Numéro de dépôt : **85401720.9**

(22) Date de dépôt : **05.09.85**

(54) Projectile d'artillerie à portée accrue.

(30) Priorité : **19.09.84 FR 8414332**

(43) Date de publication de la demande :
**23.04.86 Bulletin 86/17**

(45) Mention de la délivrance du brevet :
**15.06.88 Bulletin 88/24**

(84) Etats contractants désignés :
**AT BE DE GB IT NL SE**

(56) Documents cités :
**FR-A- 2 522 134**
**US-A- 3 217 651**
**US-A- 3 260 208**
**US-A- 3 283 721**
**US-A- 4 213 393**

(73) Titulaire : **ETAT-FRANCAIS représenté par le DELE-
GUE GENERAL POUR L'ARMEMENT (DPAG)
Bureau des Brevets et Inventions de la Délégation
Générale pour l'Armement 26, Boulevard Victor
F-75996 Paris Armées (FR)**

(72) Inventeur : **Chevalier, Alain
69, route des Coulangis
F-18000 Asnieres les Bourges (FR)**

EP 0 178 959 B1

## Description

Le secteur technique de la présente invention est celui des projectiles d'artillerie comportant des moyens pour accroître leur portée.

On a déjà proposé divers projectiles ayant une portée accrue. Ainsi, le brevet US-A-3 885 385 décrit un dispositif permettant de réduire la traînée de culot d'un projectile et d'en accroître sa portée. Il consiste à placer au culot du projectile une composition pyrotechnique à vitesse de combustion lente, initiée à un instant donné après le lancement. Il en est de même du brevet FR-A-2 328 938 ou US-A-4 213 393 qui décrit un dispositif similaire et où on précise la pression de combustion qui doit être faible, c'est-à-dire proche de la pression ambiante afin d'obtenir un écoulement de faible débit pendant une partie importante de la trajectoire du projectile.

On a encore proposé dans le brevet FR-A-2 479 905 un bloc propulsif assurant une propulsion additionnelle du projectile sur sa trajectoire. Cependant, ce bloc est placé dans l'ogive du projectile entre la fusée et la tête militaire.

On a aussi proposé dans le brevet FR-A-2 522 134 un projectile (selon le préambule de la revendication 1 et) comprenant un dispositif de propulsion additionnelle disposé à son ogive et un dispositif de réduction de traînée de culot disposé à son culot.

Les projectiles décrits dans les deux premiers brevets cités donnent généralement satisfaction, mais le gain en portée reste toutefois limité. Quant aux projectiles décrits dans les deux autres brevets cités, le gain en portée est très grand, mais est acquis au prix d'une modification du projectile, car il doit comporter une ogive susceptible de renfermer un chargement de propulsion.

Par ailleurs, on connaît des blocs propulsifs pour roquettes ou missiles, tels que ceux décrits dans les brevets US-A-3 283 721, 3 260 208 et 3 217 651, où on utilise deux compositions. Toutefois, il s'agit toujours de propulsion de projectiles qui ne sont pas lancés à l'aide d'un canon d'artillerie et où les problèmes de réduction de traînée de culot ne sont pas pris en compte.

La présente invention vise à fournir un projectile d'artillerie de portée accrue à la fois par rapport aux projectiles classiques et par rapport aux projectiles comportant un dispositif de réduction de traînée sans modification d'aucune sorte des caractéristiques géométriques du projectile classique.

L'invention a donc pour objet un projectile d'artillerie à portée accrue, de calibre quelconque, du type comportant à son culot une chambre de combustion prolongée par une ou plusieurs tuyères, une charge pyrotechnique engendrant une réduction de traînée de culot et une charge engendrant une propulsion additionnelle, caractérisé en ce que les deux charges sont intégrées dans la chambre de combustion et sont fusionnées au niveau de leur surface de jonction, pour constituer un bloc cylindrique coulé muni ou non d'un canal central, la composition à vitesse de combustion lente de l'ordre de 0,7 à 2 mm/s sous une pression de $10^5$ Pa étant amorcée lors du lancement du projectile pour initier en fin de combustion la composition à vitesse de combustion rapide de l'ordre de 5 à 20 mm/s sous une pression de $10^6$ Pa.

Le bloc est bicomposition, les deux compositions étant concentriques de révolution cylindrique et réalisées sous forme d'un ou plusieurs secteurs annulaires, la première à vitesse de combustion lente étant interne et munie du canal central, la seconde à vitesse de combustion rapide étant externe.

Le bloc est tricomposition, la première à vitesse de combustion lente étant munie du canal central et amorcée lors du lancement, la seconde à vitesse de combustion rapide étant amorcée par la première, la troisième à vitesse de combustion lente étant amorcée par la seconde.

La masse de la composition à vitesse de combustion lente représente 10 à 50 % de la masse totale du bloc.

Le diamètre au col de la (ou des) tuyère (s) est compris entre 19 et 32 % de la valeur du calibre.

Le rapport de détente est compris entre 1,5 et 3.

Un avantage de la présente invention réside dans le fait que l'on peut intégrer dans une même chambre de combustion un bloc au moins bicomposition tout en respectant leurs spécificités ; en effet, les conditions d'amorçage ou de non-amorçage, de vitesse de combustion sont respectées quelle que soit la composition initiée.

Un autre avantage de l'invention réside dans l'utilisation d'un bloc unique, de fabrication aisée, doué des deux fonctions de réduction de traînée et de propulsion additionnelle.

Un autre avantage de l'invention réside dans la grande simplicité de conception et dans le faible encombrement du bloc permettant de conserver une tête militaire hautement performante.

D'autres avantages de l'invention seront mieux compris à la lecture du complément de description qui va suivre d'un mode de réalisation particulier donné à titre d'exemple en référence au dessin schématique annexé dans lequel :

- la figure 1 est une coupe d'un projectile selon l'invention,
- la figure 2 représente une coupe détaillée du culot du projectile ;
- la figure 3 représente des exemples de réalisation de blocs selon l'invention.

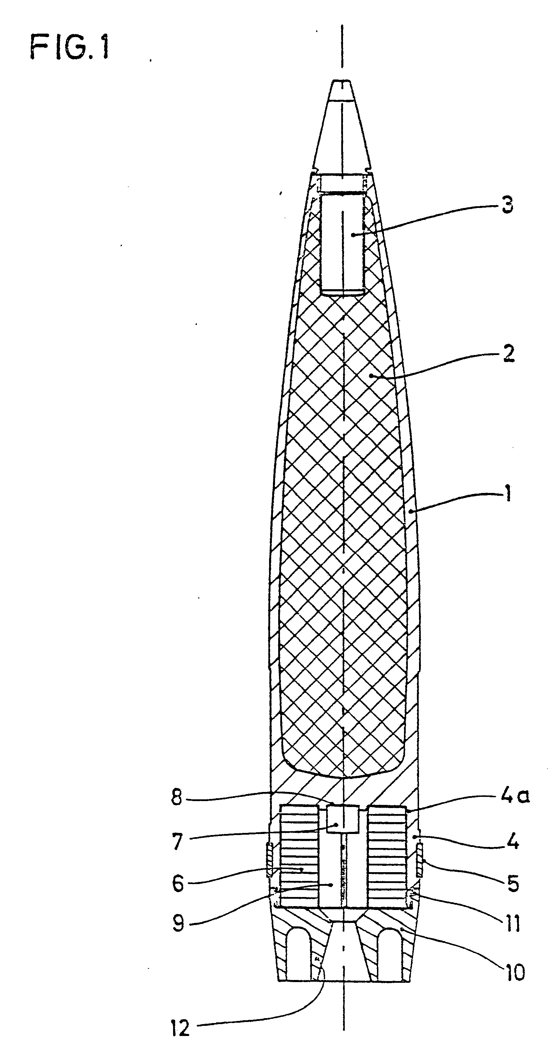

Le projectile schématisé sur la figure 1 comprend classiquement un corps 1 creux dans lequel est placée une charge militaire 2, par exemple du type explosive, une fusée 3 de tête nécessaire à l'allumage de la charge 2, un culot 4 au niveau duquel est prévue une ceinture de forcement 5. Le culot 4 est creux et délimite la chambre de combustion 4a. Celle-ci renferme le bloc 6 de révolution cylindre, et un allumeur pyrotechnique 7 vissé dans un alésage fileté 8. Le bloc 6, délimite un canal central 9 par l'intermédiaire duquel la combustion du bloc 6 progresse. Le culot 4 est fermé par une partie terminale 10 vissée sur un épaulement 11 du culot, ajustée au profil du corps 1 et délimitant une ou plusieurs tuyères 12 présentant un convergent 12a et un divergent 12b, séparés par un col 12c.

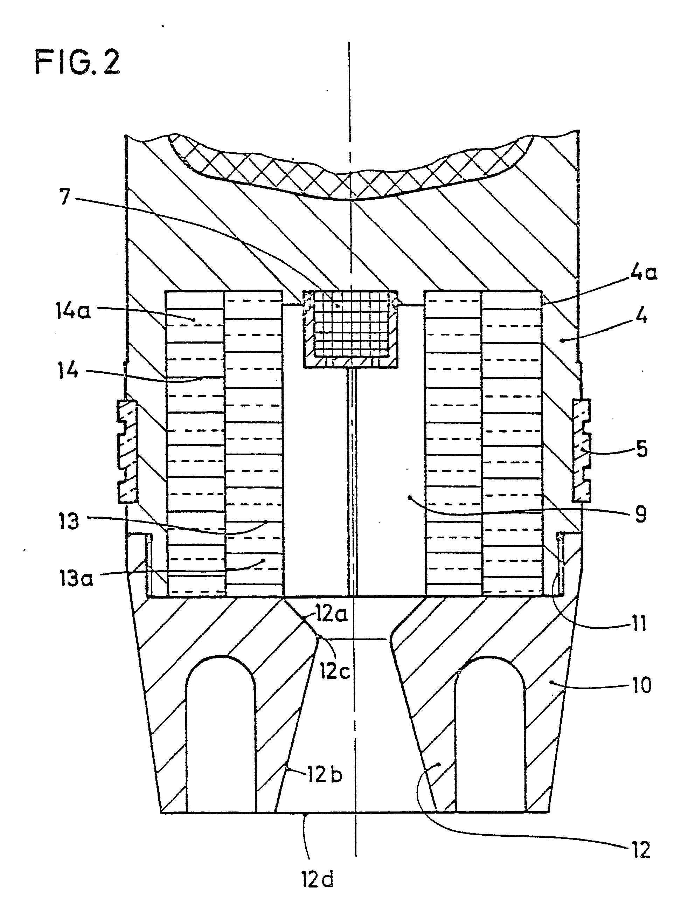

Sur la figure 2, on voit que le bloc 6 est constitué de deux couches concentriques d'une composition 13 délimitant le canal central 9 et d'une composition 14 dont le diamètre externe est adapté au diamètre intérieur de la chambre de combustion 4a. Chaque composition est constituée de plusieurs secteurs (13a, 14a). La composition 13 est une composition pyrotechnique à vitesse de combustion lente de l'ordre de 0,7 à 2 mm/s. Elle est constituée par exemple de 75 à 85 % en masse d'un perchlorate du type perchlorate d'ammonium et de 15 à 25 % de liant du type polybutadienne. La composition 14 est une composition pyrotechnique à vitesse de combustion rapide de l'ordre de 15 mm/s et est constituée par exemple par 55 à 65 % en masse d'un perchlorate tel le perchlorate d'ammonium, 15 à 25 % en masse de poudre métallique telle l'aluminium, le reste étant constitué par un liant du type polybutadienne. Le bloc peut être réalisé de manière connue, avantageusement, il peut être réalisé par coulée successive de chacune des compositions, suivie à chaque fois d'une cuisson à température modérée.

La masse du bloc 6 est adaptée en fonction du calibre de la munition et de la portée maximale recherchée.

Le fonctionnement est le suivant : la composition 13 est d'abord allumée, soit par les gaz de combustion très chauds dans le tube de l'arme, soit par l'allumeur 7 si celle-ci est éteinte par la dépression engendrée lors du passage à la bouche de l'arme. L'écoulement des gaz de combustion s'effectue au travers de la tuyère 12. La pression dans la chambre de combustion étant très peu supérieure à la pression extérieure, le col 12c de la tuyère n'est pas amorcé. La présence du divergent 12b permet de ralentir la vitesse des gaz, qui doit être la plus faible possible, et donc d'obtenir un rendement supérieur à celui d'un orifice calibré. Il en résulte que des les premiers instants de la trajectoire du projectile, on réduit la traînée de culot, de la bouche de l'arme jusqu'à un instant t optimal compris par exemple entre 5 et 25s. En effet, c'est dans ces premiers instants de la trajectoire que la traînée de culot d'une munition est maximale en raison de la densité des couches d'air.

A l'instant où le front de flamme de la composition 13 atteint la composition 14, il allume cette dernière. En raison de la vitesse de combustion élevée, le débit des gaz fournis augmente et comme ces gaz passent par la (ou les) même (s) tuyère(s) 12 que précédemment, il en résulte une augmentation de la pression à l'intérieur de la chambre de combustion 4a qui permet d'amorcer la (ou les) tuyère (s) et obtenir ainsi l'effet propulsif recherché. La réduction de traînée de culot est donc suivie à partir de l'instant optimal t par une propulsion additionnelle de durée brève comprise entre 0,2 et 5s.

Bien entendu, les caractéristiques de la tuyère sont adaptées, compte tenu des propriétés des compositions 13 et 14 pour obtenir les effets recherchés. Ainsi, le diamètre au col 12c de la (ou des) tuyère (s) doit être compris entre 19 et 32 % de la valeur du calibre, le calibre du projectile étant exprimé en mm, d'une part, et le rapport de détente représenté par le quotient du diamètre de sortie 12d de la tuyère par le diamètre au col doit être compris entre 1,5 et 3, d'autre part.

La répartition de masse entre les deux compositions (13, 14) peut varier dans une large mesure ; à titre d'exemple, la masse de la composition 13 peut être comprise entre 10 et 50 % de la masse totale du bloc 6, le reste étant constitué par celle de la composition 14.

A titre d'illustration, et pour un projectile de 155 mm les caractéristiques peuvent être les suivantes :
- masse totale de la composition 6 : 2 kg
- masse de la composition 13 : 0,8 kg
- masse de la composition 14 : 1,2 kg
- diamètre au col 12c : 40 mm
- rapport de détente : 2,5
- nature de la composition 13 :
　80 % perchlorate d'ammonium
　20 % polybutadienne
- nature de la composition 14 :
　60 % perchlorate d'ammonium
　20 % de poudre d'aluminium
　20 % de polybutadienne

La durée de combustion de la composition 13 est alors de 12s et celle de la composition 14 de 1s.

On voit que les caractéristiques du bloc 6, de la tuyère 10 peuvent être facilement adaptées en fonction du calibre du projectile.

Sur la figure 3a on a représenté une variante de réalisation du bloc 6 qui est constitué de trois compositions : les compositions 13 et 14 et une troisième composition 15 de nature identique à celle de la composition 13 et dont le rôle est d'engendrer une diminution de traînée de culot immédiatement après la propulsion additionnelle. Sur cette figure, les compositions 13, 14 et 15 sont réalisées sous forme de tube dont l'épaisseur est déterminée en fonction de la durée d'émission de gaz.

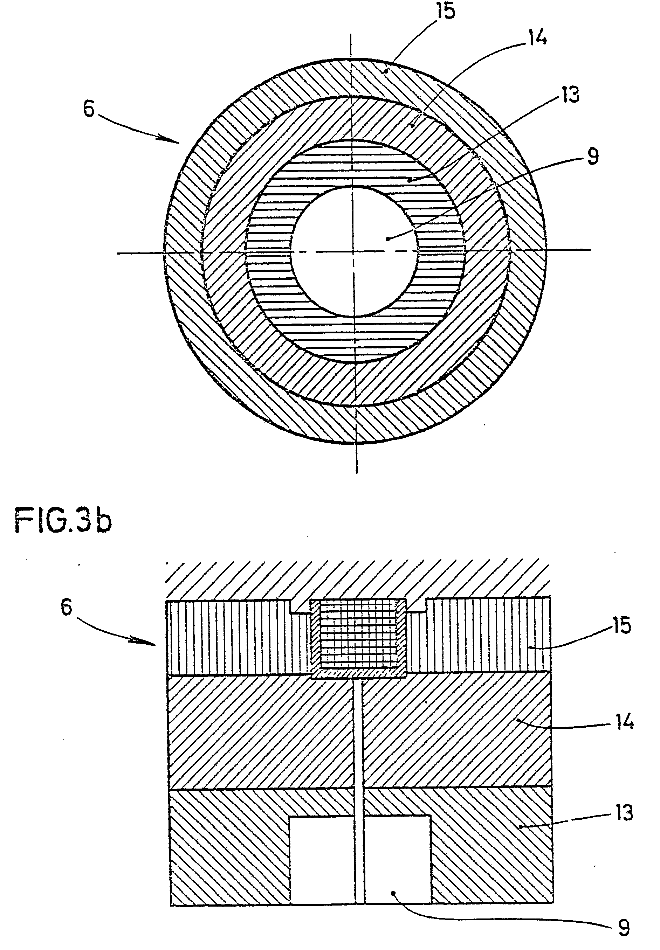

Sur la figure 3b, on retrouve les trois compositions 13, 14, et 15 produisant les effets signalés précédemment mais dont la géométrie est différente.

**Revendications**

1. Projectile d'artillerie à portée accrue, de calibre quelconque, du type comportant à son culot (4) une chambre de combustion (4a) prolongée par une ou plusieurs tuyères (12), une charge pyrotechnique (13) engendrant une réduction de traînée de culot et une charge (14) engendrant une propulsion additionnelle, caractérisé en ce que les deux charges (13, 14) sont intégrées dans la chambre de combustion (4a) et fusionnées au niveau de leur surface de jonction, pour constituer un bloc cylindrique (6) coulé muni ou non d'un canal central (9), la composition (13) à vitesse de combustion lente de l'ordre de 0,7 à 2 mm/s sous une pression de $10^5$ Pa étant amorcée lors du lancement du projectile pour initier en fin de combustion la composition (14) à vitesse de combustion rapide de l'ordre de 5 à 20 mm/s sous une pression de $10^6$ Pa.

2. Projectile selon la revendication 1, caractérisé en ce que le bloc (6) est bicomposition, les deux compositions (13, 14) étant concentriques de révolution cylindrique et réalisées sous forme d'un ou plusieurs secteurs annulaires, la première (13) à vitesse de combustion lente étant interne et munie du canal central (9), la seconde (14) à vitesse de combustion rapide étant externe.

3. Projectile d'artillerie selon la revendication 1, caractérisé en ce que le bloc (6) est tricomposition (13, 14, 15), la première (13) à vitesse de combustion lente étant munie du canal central (9) et amorcée lors du lancement, la seconde (14) à vitesse de combustion rapide étant amorcée par la première (13), la troisième (15) à vitesse de combustion lente étant amorcée par la seconde (14).

4. Projectile d'artillerie selon l'une quelconque des revendications 1 à 3, caractérisé en ce que la masse de la composition à vitesse de combustion lente représente 10 à 50 % de la masse totale du bloc (6).

5. Projectile d'artillerie selon l'une quelconque des revendications précédentes, caractérisé en ce que le diamètre au col (12c) de la (ou des) tuyère (s) est compris entre 19 et 32 % de la valeur du calibre.

6. Projectile selon la revendication 5, caractérisé en ce que le rapport de détente est compris entre 1,5 et 3.

## Claims

1. An increased-range artillery projectile of any caliber, of the type which comprises at its base (4) a combustion chamber (4a) prolonged by one or more nozzles (12), a pyrotechnic charge (13) generating a base drag reduction, and a charge (14) generating an additional propulsion, characterized in that both charges (13, 14) are integrated into the combustion chamber (4a) and blended at the location of their mating surfaces so as to form a cast cylindrical propellant grain (6) arranged with or without a central channel (9) the composition (13) with a slow burning rate on the order of 0.7 to 2 mm/s under a pressure of $10^5$ Pa being primed upon projectile launch in order to initiate at the end of combustion the composition (14) with a quick burning rate on the order of 5 to 20 mm/s under a pressure of $10^6$ Pa.

2. A projectile as claimed in claim 1, characterized in that the propellant grain (6) is of the bicomposition type, the two compositions (13, 14) being concentric, generated by cylindrical revolution and made in the form of one or more annular sectors, the first composition (13) with a slow burning rate being inside and arranged with the central channel (9) and the second composition (14) with a quick burning rate being outside.

3. An artillery projectile as claimed in claim 1, characterized in that the propellant grain (6) is of the tricomposition type (13, 14, 15), the first composition (13) with a slow burning rate being arranged with the central channel (9) and primed upon launch, the second composition (14) with a quick burning rate being primed by the first composition (13) and the third composition (15) with a slow burning rate being started by the second composition (14).

4. An artillery projectile as claimed in any of claims 1 to 3, characterized in that the mass of the composition with a slow burning rate represents 10 to 50 % of the total mass of the propellant grain (6).

5. An artillery projectile as claimed in any of the above claims, characterized in that the diameter of the nozzle (s) at the location of the nozzle throat (12c) ranges from 19 to 32 % of the caliber value.

6. A projectile as claimed in claim 5, characterized in that the expansion ratio ranges from 1.5 to 3.

## Patentansprüche

1. Artilleriegeschoß mit gesteigerter Reichweite, von beliebigem Kaliber, des Types mit einem Geschoßboden (4), der mit einer, in eine oder mehrere Schubdüsen (12) mündenden Brennkammer (4a), einer pyrotechnischen Ladung (13) zur Erzeugung einer Minderung des aerodynamischen Widerstandes sowie einer Ladung (14) zur Erzeugung eines zusätzlichen Schubes versehen ist, dadurch gekennzeichnet, daß die beiden Ladungen (13, 14) in der Brennkammer (4a) integriert sind und auf Höhe deren Berührungsflächen zur Bildung eines zylindrischen, gegossenen Blockes (6) mit oder ohne mittlerem Kanal (9) vereinigt werden, wobei die Zusammensetzung (13) mit träger Brenngeschwindigkeit von ca. 0,7 bis 2 mm/s unter einem Druck von $10^5$ Pa anläßlich des Abschusses der Munition gezündet wird, um bei Ausbrand die Zusammensetzung (14) mit rascher Brenngeschwindigkeit von ca. 5 bis 20 mm/s unter einem Druck von $10^6$ Pa zu initiieren.

2. Geschoß nach Anspruch 1, dadurch gekennzeichnet, daß der Block (6) aus zwei verschiedenen Zusammensetzungen besteht, wobei die beiden umdrehungszylindrischen Zusammensetzungen (13, 14) konzentrisch angeordnet sind und aus einem oder mehreren Kreisringstücken bestehen und wobei die erste Zusammensetzung (13) mit träger Brenngeschwindigkeit innen angeordnet und mit einem zentralen Kanal (9) versehen ist, und die zweite Zusammensetzung (14) mit rascher Brenngeschwindigkeit außen angeordnet ist.

3. Artilleriegeschoß nach Anspruch 1, dadurch gekennzeichnet, daß der Block (6) aus drei Zusammensetzungen (13, 14, 15) besteht, wobei die erste Zusammensetzung (13) mit träger Brenngeschwindigkeit mit einem zentralen Kanal (9) versehen ist und beim Abschuß gezündet wird, die zweite Zusammensetzung (14) mit rascher Brenngeschwindigkeit durch die erste (13) gezündet wird und die dritte Zusammensetzung (15) mit träger Brenngeschwindigkeit durch die zweite (14) gezündet wird.

4. Artilleriegeschoß nach einem beliebigen Anspruch 1 bis 3, dadurch gekennzeichnet, daß der Gewichtsanteil der Zusammensetzung mit träger Brenngeschwindigkeit 10 bis 50 % des Gesamtgewichtes des Blockes (6) darstellt.

5. Artilleriegeschoß nach einem beliebigen, vorherigen Anspruch, dadurch gekennzeichnet, daß der Halsdurchmesser (12c) der (oder der) Schubdüse(n) zwischen 19 und 32 % des Kaliberwertes entspricht.

6. Geschoß nach Anspruch 5, dadurch gekennzeichnet, daß das Entspannungsverhältnis zwischen 1,5 und 3 liegt.

# FIG.1

FIG. 2

FIG.3b